# EUROPÄISCHE PATENTSCHRIFT

(11) **EP 3 021 974 B1**
(45) Veröffentlichungstag und Bekanntmachung des Hinweises auf die Patenterteilung: **27.06.2018**
(21) Anmeldenummer: 14750321.3
(22) Anmeldetag: 10.07.2014
(51) Int. Cl.: B04B 9/08, F16D 1/108

(54) **ZENTRIFUGE**
CENTRIFUGE
CENTRIFUGEUSE

(30) Priorität: 18.07.2013 DE 102013107681
(43) Veröffentlichungstag der Anmeldung: 25.05.2016
(73) Patentinhaber: Andreas Hettich GmbH & Co. KG, 78532 Tuttlingen (DE)
(72) Erfinder: EBERLE, Klaus-Günter, 78532 Tuttlingen (DE); HORNEK, Matthias, 78532 Tuttlingen (DE); THÜRINGER, Frank, 78573 Wurmlingen (DE); HÖLDERLE, Andreas, 78199 Bräunlingen (DE)
(74) Vertreter: Puschmann Borchert Bardehle Patentanwälte Partnerschaft mbB
(86) Internationale Anmeldenummer: PCT/EP2014/064868
(87) Internationale Veröffentlichungsnummer: WO 2015/007620

(56) Entgegenhaltungen:
- WO-A1-83/04379
- DE-T2- 69 514 988
- DE-U1-202010 014 803
- JP-A- 2001 205 136
- JP-U- S56 164 040

## Beschreibung

Die Erfindung betrifft eine Zentrifuge gemäß der im Oberbegriff des Patentanspruches 1 angegebenen Art.

Es sind bereits Zentrifugen mit abnehmbarem Rotor bekannt, die eine Einrichtung zur axialen Verriegelung des Rotors auf der Antriebswelle aufweisen und bei denen zur Verriegelung keine aufwendige Montage und kein spezielles Werkzeug erforderlich sind. Zum Beispiel wird in der DE 695 14 988 T2 eine Zentrifuge vorgeschlagen, bei der der Rotor beim Aufsetzen automatisch in eine Verriegelungsposition gebracht wird. Hierbei greift ein federbeaufschlagter Riegel in eine Aussparung in der Antriebswelle ein und gewährleistet dadurch eine axiale Feststellung des Rotors. Allerdings bestehen hier die Nachteile, dass bei dieser Lösung die Antriebswelle zu einem nicht unbeträchtlichen Teil in den Rotor eindringen muss, um genügend Angriffsfläche für den Verriegelungsmechanismus zu bieten, und dass die Verriegelung unterhalb des Rotors stattfindet. Dadurch ist ein größerer Platzbedarf erforderlich. Zudem wird die Antriebswelle durch die Anordnung eines Teils des Verriegelungsmechanismus in der Antriebswelle geschwächt. Die Drehzahl und/oder Haltbarkeit derartiger Ausführungen ist daher begrenzt.

Aus der DE 20 2010 014 803 U1 ist eine Zentrifuge bekannt. Diese weist eine Rotorlagerung mit einem Verriegelungssystem auf, beim dem der Rotor auf der Antriebswelle fixiert wird. Das Verriegelungssystem umfasst sich senkrecht zu der Drehachse erstreckende Achsen und zwischen einer Verriegelungsstellung und einer Entriegelungsstellung um die Achsen schwenkbare Verriegelungshebel. Die Verriegelungshebel greifen in der Verriegelungsstellung in eine Ringnut in der Antriebswelle ein und fixieren den Rotor auf der Welle axial. Die Verriegelungshebel sind drehzahlabhängig selbsttätig aus der Entriegelungsstellung in die Verriegelungsstellung überführbar. Bei ca. 600 RPM wird bei Laborzentrifugen oftmals die erste Resonanz durchlaufen. Die gattungsgemäße Zentrifuge kann jedoch bei diesen Drehzahlen keine nennenswerte axiale Haltekraft aufbringen.

Die WO 2011/054906 A1 offenbart eine Zentrifuge mit einem über einen Verriegelungsmechanismus mit einer Antriebswelle verbindbaren Rotor. Der Verriegelungsmechanismus weist dabei um parallel zur Antriebsachse verlaufende Achsen schwenkbare Klinken auf, die eine derartige Masseverteilung aufweisen, dass diese drehzahlabhängig in der Verriegelungsposition gehalten werden. Die Klinken greifen dabei in eine Ringnut der Antriebswelle ein.

Die US 2008/0146429 A1 weist lediglich ein Sperrelement auf, das durch eine Handhabe senkrecht zur Antriebswelle aus einer Entriegelungsposition in eine Verriegelungsposition bewegt wird.

Aus der JP 164 040 A ist eine gattungsgemäße Zentrifuge mit Schnellverschluss zum Verbinden eines Rotors mit einer Antriebswelle bekannt. Ein Endbereich der Antriebswelle weist eine Nut auf, in die Sperrelemente in Form von Kugeln zum Verriegeln des Rotors auf der Antriebswelle eingreifen. Eine Handhabe bewegt die Kugeln über eine Relativbewegung zu ihrer Basis aus einer Verriegelungsposition in eine Entriegelungsposition. Die Bewegung der Handhabe erfolgt dabei in eine Richtung parallel zur Antriebswelle. Eine Öffnungswand begrenzt eine Öffnung, in welche die Antriebswelle eingreift. Die Kugeln sind in einer Ausnehmung einer Öffnungswand eingebracht. Die Ausnehmung in der Öffnungswand ist dabei der Nut im Endbereich der Antriebswelle zugeordnet. Die Nut befindet sich im eingebrachten Zustand neben der Ausnehmung in der Öffnungswand, sodass die Kugel bedarfsweise in die Nut eingreifen kann.

Weitere Zentrifugen mit Schnellverschlüssen sind aus der JP 2001/205136 A und der WO 83/04379 A bekannt.

Aufgabe der vorliegenden Erfindung besteht darin, unter Vermeidung der genannten Nachteile eine Zentrifuge mit einem abnehmbaren Rotor zu schaffen, die einen einfacheren und sicheren Schnellverschluss aufweist, der vor allem auch drehzahlunabhängig ist. Insbesondere soll der Verriegelungsmechanismus im Bereich des Rotors weniger Platz für die Verriegelung erfordern.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

Der Erfindung liegt die Erkenntnis zugrunde, dass es möglich ist, eine sichere axiale Feststellung in Entnahmerichtung von Rotor und Antriebswelle beim Aufsetzen des Rotors auf die Antriebswelle durch eine Verschlusseinrichtung zu gewährleisten, bei der die Antriebswelle mit einem verbreiterten Bereich eine Rotoröffnung durchgreift und eine Verschließeinrichtung zwischen Rotor und verbreiterten Bereich die Öffnung so blockiert, dass der Rotor zur Antriebswelle in Entnahmerichtung festgelegt ist. Auf einfache Weise ist dadurch der Rotor sicher auf der Antriebswelle angeordnet und auch bei hohen Drehzahlen und der damit einhergehenden elastischen Verformung von Bauteilen der Zentrifuge sicher und mit einfach herzustellenden Mitteln in der Zentrifuge angeordnet.

Nach der Erfindung weist die Zentrifuge eine Antriebswelle mit einem Endbereich auf, welcher sich zum restlichen Bereich der Antriebswelle hin verjüngt, wobei die Verjüngung graduell oder sprunghaft sein kann, sowie einen auf der Antriebswelle gelagerten, axial in eine Entnahmerichtung abnehmbaren Rotor, ferner ein Lager für den Rotor, welches mit der Antriebswelle verbunden ist und den Rotor zumindest entgegen der Entnahmerichtung festlegt, des Weiteren einen in den Rotor integrierten Schnellverschluss, mittels dessen die Antriebswelle und der Rotor in Entnahmerichtung festgelegt sind, und schließlich eine Öffnung im Rotor, durch die die Antriebswelle mit dem Endbereich greift, und die durch eine Öffnungswand begrenzt ist. Dabei sind zur Fixierung des Rotors relativ zur Antriebswelle rotorseitig Sperrelemente vorgesehen, die jeweils den Endbereich teilweise umgreifen. In Entnahmerichtung liegen die Sperrelemente bereichsweise an dem Endbereich an und entgegen der Entnahmerichtung an der Öffnungswand. Dabei ist der durch die Sperrelemente gebildete Außenumfang größer als der Innenumfang der Öffnung. Dadurch entsteht eine Keilwirkung, die sich noch verstärkt, sobald auf den sich drehenden Rotor eine Kraft in Entnahmerichtung zu wirken beginnt. Der Endbereich weist einen verbreiterten Bereich auf, der sich zu einem restlichen Bereich der Antriebswelle hin verjüngt. Der Schnellverschluss ist mit Kraftübertragungselementen versehen, welche die Sperrelemente mit einer Handhabe verbinden, und dass die Verriegelung und/oder die Entriegelung des Schnellverschlusses jeweils durch eine Bewegung der Handhabe und der Kraftübertragungselemente in eine Richtung parallel zur Antriebswelle erfolgen. Hierrüber können Verriegelung und Entriegelung direkt und besonders genau gesteuert werden. Zudem können dadurch einerseits das Aufsetzen des Rotors auf die Antriebswelle mit der Verriegelung und andererseits die Entnahme des Rotors mit der Entriegelung gut kombiniert werden. Die erfindungsgemäße Lösung ist gegenüber der gattungsgemäßen Ausführung weniger störanfällig. Die Antriebswelle und der Rotor können einfacher ausgeführt werden. Es müssen weniger Teile aufwändig montiert werden. Der Rotor ist unabhängig von der Drehzahl immer sicher fixiert.

Diese Anordnung hat den Vorteil, dass nur ein vergleichsweise kleiner Endbereich der Antriebswelle zur axialen Feststellung von Rotor und Antriebswelle verwendet werden muss und dass auf einen Verriegelungsmechanismus verzichtet werden kann, der zur Fixierung eine laterale Kraft ausübt und bei dem ein gewisser Längenabschnitt der Antriebswelle erforderlich ist. Somit wird ein geringerer Platzbedarf erreicht und eine Schwächung der Antriebswelle vermieden.

Bei einer bevorzugten Ausführung sind die Sperrelemente über zumindest eine Feder federelastisch bewegbar und in Richtung der Antriebswelle vorgespannt. Durch diese Federbeaufschlagung ist gewährleistet, dass die Sperrelemente beim Aufsetzen des Rotors entgegen der durch die Öffnung eingreifenden Antriebswelle leicht in ihre vorgesehene Position gelangen, den Endbereich der Antriebswelle umfassen und somit den Rotor und die Antriebswelle axial fixieren.

Besonders gut kann einer ungewollten Verdrängung der Sperrelemente aus ihrer vorgesehenen Position entgegengewirkt werden, wenn die Sperrelemente durch die Feder elastisch so auslenkbar sind, dass der Endbereich in seiner breitesten Stelle in Bezug auf die Mittelachse der Antriebswelle passierbar ist.

Vorteilhaft ist es ferner, die Feder zwischen Handhabe und Sperrelemente einzubringen, weil sich dadurch die Konstruktion des Schnellverschlusses deutlich vereinfachen lässt.

Eine weitere konstruktive Vereinfachung lässt sich dadurch erzielen, dass die Kraftübertragungselemente die Feder bilden.

In einer besonders bevorzugten Ausführung der Erfindung sind die Kraftübertragungselemente federbelastet. Dies gewährleistet, dass die Sperrelemente, wenn sie beim Aufsetzen des Rotors von dem durch die Öffnung eingreifenden Endbereich der Antriebswelle zunächst aus ihrer Position verdrängt werden, schließlich in Aufsetzrichtung am Endbereich vorbeigreifen, sich an diesen anlegen und zuverlässig ihre Sperrwirkung erfüllen.

Eine noch zuverlässigere Funktion der Sperrelemente kann dadurch erreicht werden, dass sie in ihrer Form der Form des Endbereichs der Antriebswelle zumindest bereichsweise angepasst sind. Diese Ausgestaltung der Sperrelemente ermöglicht einen besseren Formschluss zwischen dem Endbereich der Antriebswelle und dem Schnellverschluss sowie zwischen dem Schnellverschluss und der Öffnungswand und reduziert die Materialbelastung, insbesondere die Belastung der Sperrelemente.

Günstig ist es, wenn der Endbereich der Antriebswelle kugelförmig ausgebildet ist und insbesondere dabei im Übergangsbereich von der Kugel zur Antriebswelle konkav verrundet ist, da es dadurch den Sperrelementen erleichtert wird, den Endbereich der Antriebswelle zu umfassen und sich an ihn anzulegen, und da darüber hinaus die Herstellung eines Formschlusses zwischen dem Endbereich der Antriebswelle und dem Schnellverschluss sowie zwischen dem Schnellverschluss und der Öffnungswand noch einmal vereinfacht wird.

Gemäß einem Aspekt der Erfindung weist die Öffnungswand eine Steuerfläche für die Sperrelemente auf, die bei Einbringen des Rotors in die Verriegelungsposition des Schnellverschlusses durch Bewegen entgegen der Entnahmerichtung die Sperrelemente in Richtung Antriebswelle bewegt und in Verriegelungsposition gegen die Antriebswelle drückt. Dies verbessert die Steuerbarkeit der Sperrelemente weiter, da diese gegen einen minimalen Widerstand leicht in ihre Sperrposition gleiten.

Eine zusätzliche Verbesserung der Stabilität der axialen Feststellung von Rotor und Antriebswelle kann dadurch erzielt werden, dass die Steuerfläche so ausgebildet ist, dass in der Verriegelungsposition die Sperrelemente bereichsweise an der dem Endbereich zugewandten Seite am Endbereich anliegen und auf der dem Endbereich abgewandten Seite an der Steuerfläche anliegen. So entsteht ein besserer Formschluss zwischen dem Endbereich der Antriebswelle und dem Schnellverschluss sowie zwischen dem Schnellverschluss und der Öffnungswand.

Als besonders vorteilhaft hat es sich erwiesen, wenn die Steuerfläche bei einer Bewegung in Entnahmerichtung, also bei Öffnen des Schnellverschlusses, ein Auslenken der Sperrelemente ermöglicht. Durch diese Ausbildung kann der Schnellverschluss mit relativ geringem Kraftaufwand bequem entriegelt werden.

Gemäß einem weiteren Aspekt der Erfindung sind die Entriegelungsrichtung und die Entnahmerichtung gleich. Dies bietet eine weitere Möglichkeit, den Aufbau des Schnellverschlusses und des Rotors einfacher und kompakter zu gestalten.

Sehr einfach kann die Entnahme des Rotors dadurch gestaltet werden, dass die Entriegelung des Schnellverschlusses und die Entnahme des Rotors mechanisch miteinander gekoppelt sind, weil dann nur eine einzelne Bewegung erforderlich ist, um gleichzeitig den Verschluss zu lösen und den Rotor aus der Zentrifuge zu entnehmen.

Eine besonders sichere Verriegelung kann dadurch erreicht werden, dass zumindest zwei, vorzugsweise drei Sperrelemente vorgesehen sind, die in gleichmäßigen Abstand zueinander angeordnet sind.

Wenn sich die Sperrelemente bereichsweise in die Öffnung erstrecken, wird ein noch besserer Formschluss zwischen dem Endbereich der Antriebswelle und dem Schnellverschluss sowie zwischen dem Schnellverschluss und der Öffnungswand erzielt und damit auch die Verriegelung verbessert.

In einer besonders bevorzugten Ausführung der Erfindung verläuft eine Schwenkachse der Sperrelemente senkrecht zur Mittelachse der Antriebswelle und die Federn verlaufen in der nicht ausgelenkten Stellung von der Schwenkachse, bezogen auf die Mittelachse, nach unten, insbesondere parallel zur Mittelachse. Diese Anordnung bewirkt, dass die Sperrelemente beim Aufsetzen und beim Abnehmen des Rotors leicht am Endbereich der Antriebswelle, insbesondere an der Verschlusskugel, entlanggleiten und dass dadurch eine leichte Ver- bzw. Entriegelung ermöglicht wird.

Gemäß einem Aspekt der Erfindung sind die Feder und das Sperrelement einstückig und materialeinheitlich ausgebildet und umgreifen bereichsweise den Endbereich. Dies senkt die Herstellungskosten und verbessert die Sperrwirkung.

Günstig ist es, wenn die Steuerfläche zumindest über eine Höhe der Mittelachse konzentrisch zu dieser verläuft und wenn die Sperrelemente zumindest über eine Höhe der Mittelachse konzentrisch zu dieser verlaufen. Durch diese konzentrische Anordnung wird die Steuerung der Sperrelemente noch sicherer gestaltet und ein Verkanten oder Verklemmen der Speerelemente, insbesondere beim Aufsetzen des Rotors, weitestgehend verhindert.

Vorteilhaft ist es ferner, wenn die Handhabe, die Kraftübertragungselemente, die Federn und die Sperrelemente in Reihe geschaltet sind. So können die Entriegelung und die Verriegelung mit minimalem Kraftaufwand mit einer Bewegung vorgenommen werden.

Bei einer bevorzugten Ausführung sind die Federn und die Sperrelemente in der Entriegelungsstellung und in der Verriegelungsstellung im Wesentlichen parallel zu der Mittelachse ausgerichtet und während der Entriegelung zeitweise schräg zur Mittelachse. Dadurch wird die Klemmkraft der Sperrelemente erhöht und die Verriegelungswirkung des Schnellverschlusses deutlich verbessert.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Schnittansicht entlang der Mittelachse der Zentrifuge nach der Erfindung;
- Fig. 2: eine vergrößerte Detailansicht des in Fig. 1 markierten Ausschnitts;
- Fig. 3: eine vergrößerte Detailansicht des in Fig. 2 markierten Ausschnitts;
- Fig. 4: eine Schnittansicht des Schnellverschlusses im entriegelten Zustand;
- Fig. 5: eine perspektivische Detailansicht der Baueinheit aus Verschlussfedern und Sperrelementen;
- Fig. 6: einen Ausschnitt aus einem Querschnitt entlang der Mittelachse der Zentrifuge von Fig. 1 mit Schnellverschluss im entriegelten Zustand, aber noch mit auf der Welle aufgesetzten Rotor;
- Fig. 6a,: einen rotorseitig Ausschnitt von Fig. 6 im von der Antriebswelle abgenommenen Zustand;
- Fig. 6b: einen wellenseitig Ausschnitt von Fig. 6, bei dem der Rotor entfernt ist;
- Fig. 7: einen Ausschnitt aus einem Querschnitt entlang der Mittelachse der Zentrifuge von Fig. 1 mit Schnellverschluss im verriegelten Zustand von Rotor und Antriebswelle;
- Fig. 7a: einen rotorseitigen Ausschnitt von Fig. 7 im von der Antriebswelle abgenommenen Zustand, und
- Fig. 7b: einen wellenseitigen Ausschnitt von Fig. 7 bei dem der Rotor entfernt ist.

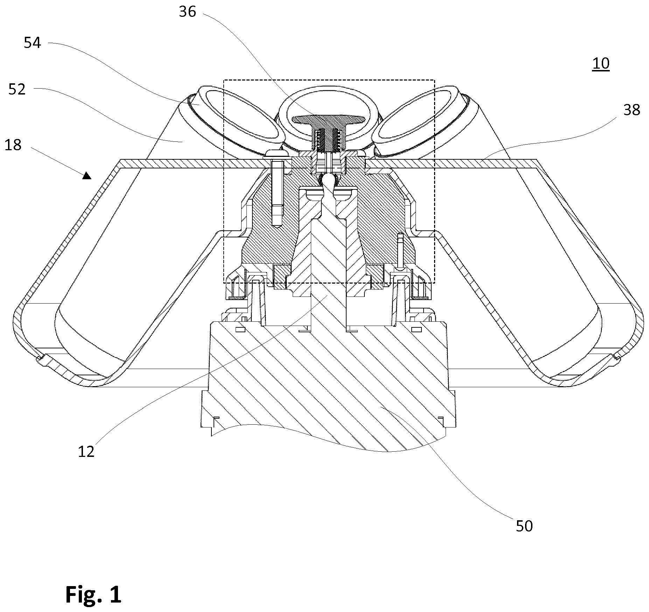

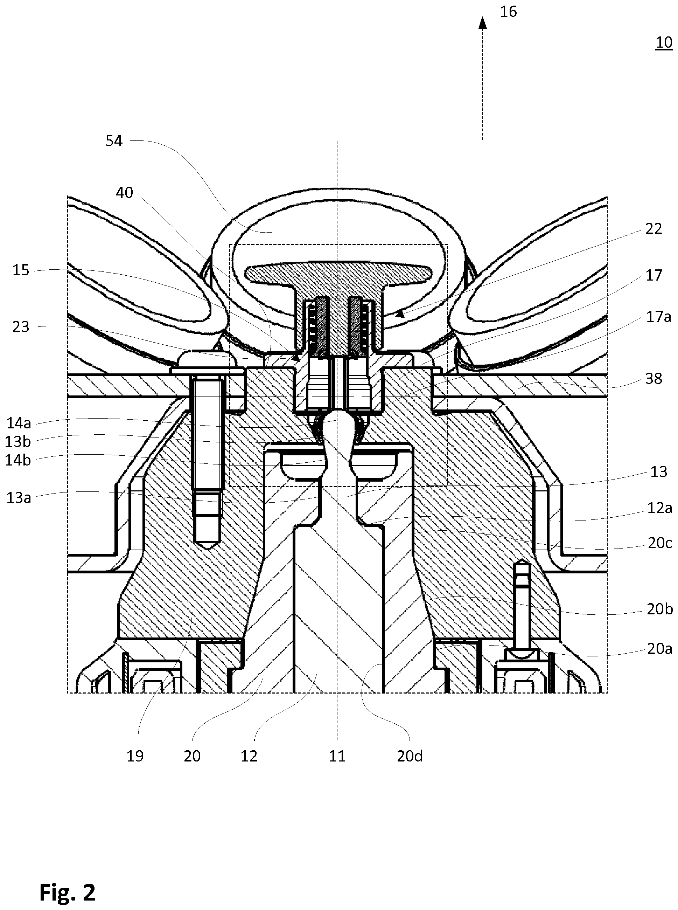

Fig. 1 zeigt in schematischer Darstellung einen vertikalen Schnitt einer insgesamt mit der Bezugsziffer 10 bezeichneten Zentrifuge. Der Übersichtlichkeit halber ist die Unterkonstruktion nicht dargestellt, es wird nur der obere Bereich des Motors schematisch angedeutet. Zur deutlicheren Darstellung sind in Fig. 2 bis Fig. 7 Ausschnitte aus Fig. 1 wiedergegeben, die die für die Erfindung wesentlichen Elemente beinhalten.

Nach dem in Fig. 1 bis 7 dargestellten Beispiel umfasst die Zentrifuge 10 eine zylindrische Antriebswelle 12 und einen auf der Antriebswelle 12 angeordneten und mit der Antriebswelle 12 drehfest verbundenen Adapter 20. Auf dem Adapter 20 ist eine konzentrisch angeordnete Rotornabe 19 eines Rotors 18 aufgebracht. Der Adapter 20 und die Rotornabe 19 sind drehfest in herkömmlicher Weise verbunden. Der Rotor 18 umfasst einen Schnellverschluss 22.

Der Adapter 20 kann konstruktiv wahlweise in Einheit mit der Rotornabe 19 oder in Einheit mit der Antriebswelle 12 ausgelegt werden und dementsprechend entweder die Antriebswelle 12 oder die Rotornabe 19 adaptieren. Im Übrigen ist der Adapter 20 optional. Alternativ kann auch die Antriebswelle 12 zur unmittelbaren Aufnahme der Rotornabe 19 ausgebildet sein.

An das freie Ende der zylindrischen Antriebswelle 12 schließt sich ein Ansatz 13 an, der aus einem zylindrischen Bereich 13a und einem Endbereich 13b besteht. Der zylindrische Bereich 13a ist mit einem geringeren Durchmesser als die Antriebswelle 12 versehen. Antriebswelle 12 und Ansatz 13 sind einstückig und materialeinheitlich ausgebildet. An den zylindrischen Bereich 13a des Ansatzes 13 schließt sich der Endbereich 13b an. Der Endbereich 13b besteht aus einer an seinem freien Ende angeordneten Verschlusskugel 14a und einem konkaven Übergangsbereich 14b, der zwischen Verschlusskugel 14a und zylindrischen Bereich 13a des Ansatzes 13 angeordnet ist.

Auf der Antriebswelle 12 ist der Adapter 20 aufgebracht. Der Adapter 20 lagert dabei auf dem Absatz 12a, welcher am freien Ende der Antriebswelle 12 um den Ansatz 13 herum ausgebildet ist, und weist ein Außenprofil auf, das wie folgt gegliedert ist. Unten ist ein Sockelbereich 20a angeordnet, daran schließt sich ein sich nach oben verjüngender Aufnahmekonus 20b an, an welchen sich wiederum ein zylindrischer Abschnitt 20c anschließt. Eine Bohrung 20d durchgreift den Adapter 20. Die Bohrung 20d und somit der Adapter 20 weisen ein Innenprofil auf, das im Wesentlichen an die Antriebswelle 12 angepasst ist, wobei das Innenprofil des Adapters 20 im Sockelbereich 20a und im Bereich des Aufnahmekonus 20b vollständig der Antriebswelle 12 angepasst ist, während es in dem Bereich des zylindrischen Abschnitts 20c, der den konkav ausgebildeten Übergangsbereich 14b unterhalb der Verschlusskugel 14a umgibt, von der Antriebswelle 12 beabstandet ist.

Der Rotor 18 weist eine Rotornabe 19 auf, deren Innenprofil in den am Außenprofil des Adapters 20 anliegenden Bereichen im Wesentlichen zu diesem Außenprofil komplementär ist und in dem konisch ausgebildeten Bereich 20b auf dem Adapter 20 lagert. Dabei erstreckt sich das Innenprofil der Rotornabe 19 über den Scheitelpunkt des Außenprofils des Adapters 20 hinaus und geht dann in einen Rotorzentralbereich 15 über, welcher einstückig mit der Rotornabe 19 ausgebildet ist. Der Rotorzentralbereich 15 weist eine Unterseite auf, die vom Scheitelpunkt des Innenprofils der Rotornabe 19 ausgehend in Richtung Mittelachse 11 schräg nach unten bis auf Höhe des Übergangs von der Verschlusskugel 14a in den Übergangsbereich 14b verläuft und im Zentrum des Rotorzentralbereichs 15 eine Öffnung 24 ausbildet, in die die Verschlusskugel 14a eingreift. Die Öffnung 24 ist so dimensioniert, dass die Verschlusskugel 14a mit minimalem Spiel in sie eingreifen kann, und weist eine sich nach oben hin im Durchmesser verbreitende Öffnungswand 26 auf, deren unteres Ende zu einer Schließkontur/Steuerfläche 28 ausgebildet ist und deren oberes Ende in einen lotrecht zur Mittelachse 11 liegenden Absatz 17a übergeht. Oberhalb des Absatzes 17a weist der Rotorzentralbereich 15 ein konzentrisches, oben im Querschnitt beidseitig rechteckig profiliertes Wandstück 17 auf, das durch eine Öffnung 40 in der horizontalen Gehäusewand 38 hindurchragt und dessen Innen- und Außenseite parallel zur Mittelachse 11 ausgerichtet sind.

An der Innenseite des Wandstücks 17 ist passförmig der Schnellverschluss 22 eingesetzt, der eine Handhabe 36, ein Gehäuse 23, ein in einer Führungsröhre geführtes längliches Verbindungselement 35, Druckfedern 33 und eine Mehrzahl von Verschlussfedern 32 umfasst. Die Handhabe 36 ist gegen die Druckfeder 33 relativ zum Gehäuse nach oben in eine Entriegelungsrichtung und Entnahmerichtung 16, parallel zur Mittelachse 11 verschiebbar. Hierfür das Verbindungselement 35 einen Absatz 35a auf, an dem die Druckfeder 33 unten anliegt. Das Gehäuse 23 erstreckt sich rohrförmig nach oben und weist ebenfalls einen Absatz 23a, an dem die Druckfeder 33 oben anliegt.

Die Verschlussfedern 32 sind Kraftübertragungselemente, die am der Antriebswelle 12 zugewandten Ende des Verbindungselements 35 an einem Verbindungsring 35b angebracht sind und die ihrerseits an den der Antriebswelle 12 zugewandten Ende Sperrelemente 30 aufweisen. Dabei sind die Verschlussfedern 32 und die Sperrelemente 30 einstückig ausgebildet. Zwischen der Führungsröhre des Verbindungselements 35 und der Innenwand des Gehäuses 23 ist die parallel zur Mittelachse 11 ausgerichtete Druckfeder 33 vorgesehen, die auf die aus Verbindungselement 35, Führungsröhre und Verschlussfedern 32 mit Sperrelementen 30 gebildete Einheit Druck in Richtung Antriebswelle 12 ausübt. Die Verschlussfedern 32 liegen mit den Sperrelementen 30 so an der durch die Öffnung 24 in den Rotor 18 eingreifenden Verschlusskugel 14a an, dass sich die Sperrelemente 30 zwischen die Schließkontur 28 und die Verschlusskugel 14a klemmen.

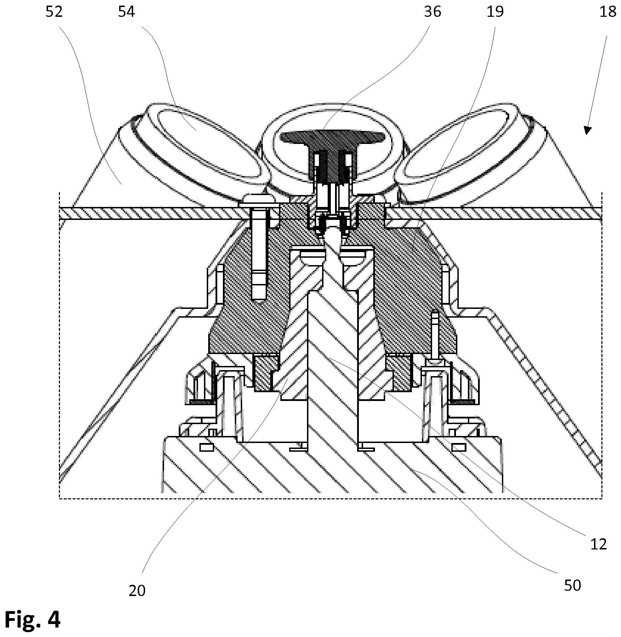

In Fig. 4 sind der Innenbereich des Rotors 18, der Schnellverschluss 22 und die Verschlusskugel 14a schematisch in dem Zustand dargestellt, in dem sie sich beim Aufsetzen des Rotors 18 auf die Antriebswelle 12 vor dem Verriegeln befinden. Der Außenumfang der Verschlusskugel 14a an ihrer breitesten Stelle 13c ist so bemessen, dass sie mit minimalem Spiel die Öffnung 24 passieren kann. Auf Grund des Drucks, der von den Druckfedern 33 in Richtung Antriebswelle 12 ausgeübt wird, liegen die an den Enden der Verschlussfedern 32 vorgesehenen Sperrelemente 30 mit ihren von der Achse der Antriebswelle 12 abgewandten Seiten an einer Schließkontur 28 an.

Wird nun der Rotor 18 heruntergedrückt, greift die Verschlusskugel 14a durch die Öffnung 24 und verdrängt dabei zuerst die Sperrelemente 30 sowohl axial in Entnahmerichtung 16 als auch lateral. Auf Grund der federelastischen Ausbildung der Verschlussfedern 32 gleiten die Sperrelemente 30 entlang der Oberfläche der Verschlusskugel 14a wieder annähernd zurück in die Position, in der sie sich vor dem Eingreifen der Verschlusskugel 14a befanden.

Die Sperrelemente 30 liegen daraufhin mit ihrer Stützfläche 30b an der Schließkontur 28 und mit ihren der Mittelachse 11 zugewandten Lagerfläche 30a an der Verschlusskugel 14a an. Dabei verkeilen sich die Sperrelemente 30 zwischen Verschlusskugel 14a und Schließkontur 28 und fixieren den Rotor 18 relativ zur Antriebswelle 12. Sobald der Rotor 18 in Betrieb ist und auf Grund der Rotation Kräfte in Entnahmerichtung 16 auf ihn einwirken, erhöht sich die Keilwirkung der Sperrelemente 30 zwischen Verschlusskugel 14a und Schließkontur 28 noch.

Kommt der Rotor 18 nach dem Ende der Zentrifugation zum Stillstand, wirken keine Kräfte in Entnahmerichtung 16 mehr auf ihn. Dadurch verringert sich die Keilwirkung der Sperrelemente 30 beträchtlich, so dass die Sperrelemente 30 durch Anheben des Verschlusskopfs 36 leicht aus ihrer Position zwischen Verschlusskugel 14a und Schließkontur 28 entfernt werden können. Daraufhin kann der Rotor 18 wieder vom Adapter 20 abgehoben werden.

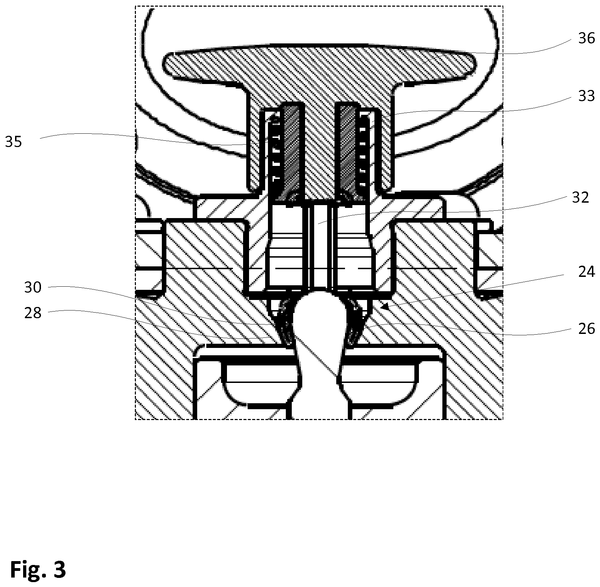

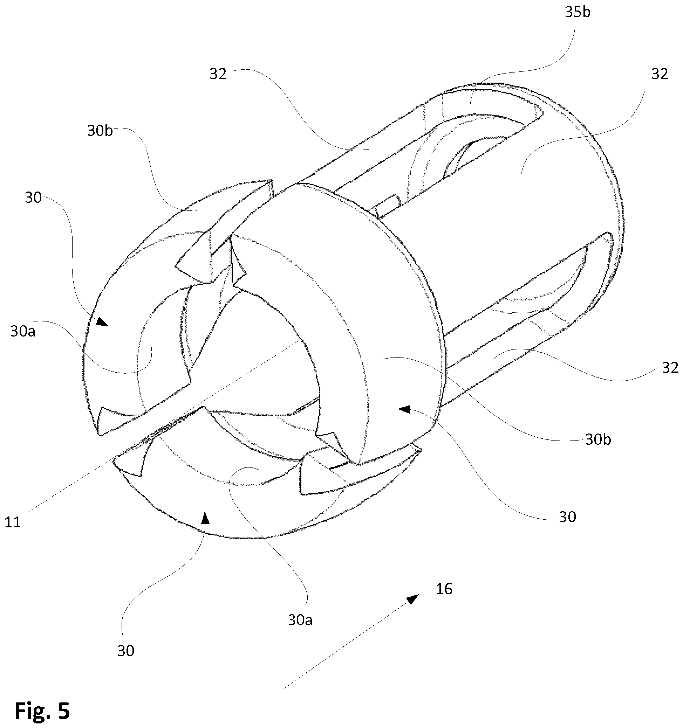

In Fig. 5 ist die Anordnung der Verschlussfedern 32 und Sperrelemente 30 perspektivisch dargestellt. An der vom Betrachter abgewandten Seite befindet sich ein Verbindungsring 35b, der am der Antriebswelle 12 zugewandten Ende des hier nicht dargestellten Verbindungselements 35 konzentrisch um die Mittelachse 11 verläuft. Einstückig und materialeinheitlich mit dem Verbindungsring 35b sind an dessen Umfang in gleichmäßigen Abständen zueinander drei Verschlussfedern 32 angeordnet, an deren Enden - in Richtung des Betrachters weisend - jeweils ein Sperrelement 30 vorgesehen ist. Wie bereits in den Fig. 3 und 4 erläutert, werden die Sperrelemente 30 beim Aufsetzen des Rotors 18 zunächst von der hier der Übersichtlichkeit halber nicht gezeigten Verschlusskugel 14a sowohl axial in Entnahmerichtung 16 als auch lateral verdrängt. Nach dem Passieren der Verschlusskugel 14a werden die Sperrelemente 30 von den Verschlussfedern 32 im Wesentlichen wieder in ihre ursprüngliche Position gebracht. Die Sperrelemente 30 liegen dann mit ihren zur Mittelachse 11 weisenden Lagerfläche 30a an der Verschlusskugel 14a an und mit ihrer Stützfläche 30b an der hier ebenfalls nicht dargestellten Steuerfläche 28 der Rotornabe 19.

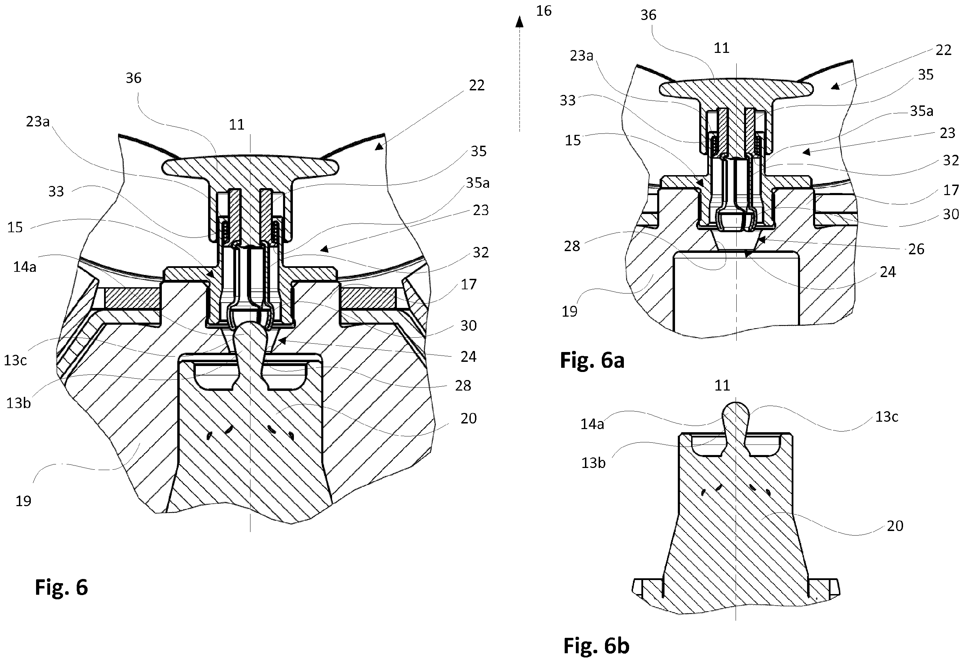

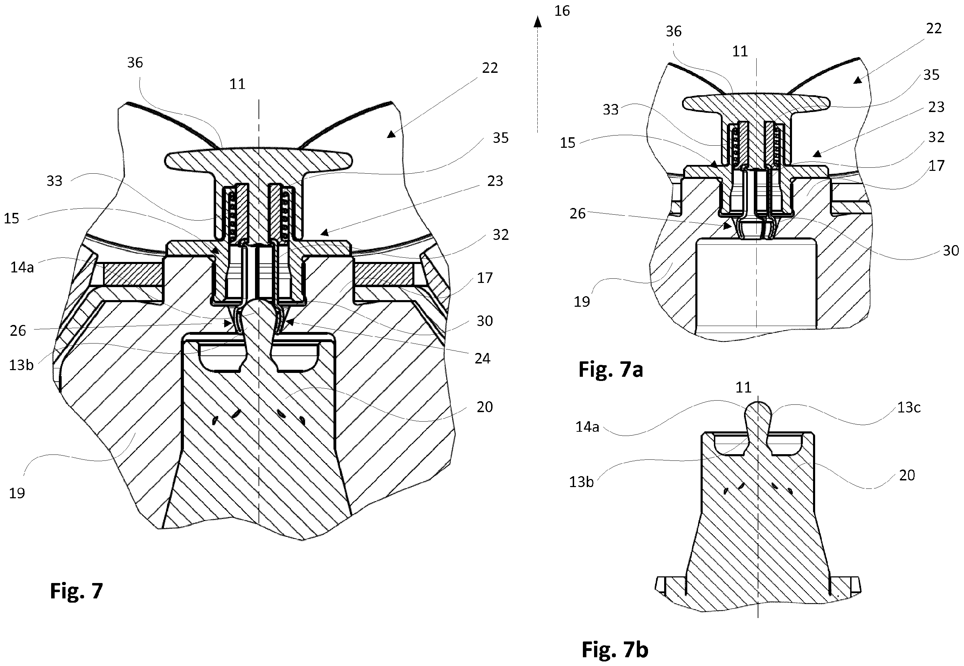

In den Figuren 6 und 7 wird die Funktionsweise des Schnellverschlusses 22 nochmals verdeutlicht. Dabei ist der Schnellverschluss 22 in Fig. 6 beim Aufsetzen auf die Antriebswelle 12 bzw. auf den Adapter 20 dargestellt und in Fig. 7 im vollständig eingerasteten Zustand. Die Figuren 6a und 6b bzw. 7a und 7b zeigen jeweils einen Ausschnitt von Fig. 6 bzw. Fig. 7, jedoch aufgeteilt in jeweils zwei Teilansichten (6a und 7a rotorseitig, 6b und 7b wellenseitig).

Wie bereits in den Figuren 1 bis 4 dargestellt ist die Rotornabe 19 auf dem Adapter 20 konzentrisch angeordnet. Der Adapter 20 ist auf der Antriebswelle 12 angeordnet und mit der Antriebswelle 12 drehfest verbunden. Der Einfachheit halber werden Adapter 20 und Antriebswelle 12 hier als funktionelle Einheit dargestellt, so dass von der Antriebswelle 12 nur der rotorseitig aus dem Adapter 20 herausragende Endbereich 13b mit der Verschlusskugel 14b erkennbar ist. Die Verschlusskugel 14b greift durch die Öffnung 24 in der Rotornabe 19 in den Rotorzentralbereich 15 ein. In Entnahmerichtung 16 ist oberhalb der Rotornabe 19 konzentrisch zur Mittelachse 11 das Wandstück 17 angeordnet, in das der Schnellverschluss 22 eingesetzt und mit dem Wandstück durch eine hier nicht dargestellte Schraubverbindung fest verbunden ist.

Die Handhabe 36 umgreift in Entnahmerichtung 16 oberhalb des Rotors 18 das Gehäuse 23. Durch Auskragungen - Absatz 23a - am der Handhabe 36 zugewandten Ende des Gehäuses 23 und der in das Gehäuse 23 eingreifenden Ende des Verbindungselements 35 - Absatz 35a - wird ein Abheben der Handhabe 36 vom Gehäuse 23 verhindert. Wie oben erläutert ist zwischen Handhabe 36 und Gehäuse 23 die Druckfeder 33 zwischengeschaltet.

In Fig. 6 und den ergänzenden Figuren 6a und 6b ist die Druckfeder 33 zusammengedrückt, so dass die aus Handhabe 36, Verbindungselement 35 und Verschlussfedern 32 mit Sperrelementen 30 gebildete Einheit auf der Mittelachse 11 in Entnahmerichtung 16 verschoben ist. Die Sperrelemente 30 berühren mit ihren freien Enden die Verschlusskugel 14a, liegen jedoch nicht an ihr an und haben noch keine Keilwirkung.

In Fig. 7 und den ergänzenden Figuren 7a und 7b sind die Druckfedern 33 entspannt, wodurch die aus Handhabe 36, Verbindungselement 35 und Verschlussfedern 32 mit Sperrelementen 30 gebildete Einheit entgegen der Entnahmerichtung 16 verschoben ist, wie bereits im Zusammenhang mit Fig. 4 beschrieben. Die Sperrelemente 30 sind nun zwischen Verschlusskugel 14a und Steuerfläche 28 verklemmt und entfalten eine Keilwirkung.

### Bezugszeichenliste

- 10: Zentrifuge
- 11: Mittelachse
- 12: Antriebswelle
- 12a: Absatz
- 13: Ansatz
- 13a: zylindrischer Bereich
- 13b: Endbereich
- 13c: breiteste Stelle
- 14a: Verschlusskugel
- 14b: Übergangsbereich
- 15: Rotorzentralbereich
- 16: Entnahmerichtung
- 17: Wandstück
- 17a: Absatz
- 18: Rotor
- 19: Rotornabe
- 20: Adapter
- 20a: Sockelbereich
- 20b: Aufnahmekonus
- 20c: zylindrischer Abschnitt
- 20d: Bohrung
- 22: Schnellverschluss
- 23: Gehäuse
- 23a: Absatz des Gehäuses 23 oben
- 24: Öffnung
- 26: Öffnungswand
- 28: Steuerfläche
- 30: Sperrelemente
- 30a: Lagerfläche
- 30b: Stützfläche
- 31: Schwenkachse
- 32: Verschlussfedern
- 33: Druckfeder
- 35: Verbindungselement
- 35a: Absatz des Verbindungselements 35
- 35b: Verbindungsring
- 36: Handhabe
- 38: Gehäusewand
- 40: Öffnung
- 50: Motor
- 52: Ausnehmungen für Probenbehälter
- 54: Probenbehälter

## Patentansprüche

1. Zentrifuge (10), aufweisend
a) eine Antriebswelle (12), welche einen Endbereich (13b) aufweist, der sich zur Mittelachse (11) der Antriebswelle (12) hin verjüngt,
b) einen auf der Antriebswelle (12) gelagerten, axial in eine Entnahmerichtung (16) abnehmbaren Rotor (18),
c) ein Lager (20) für den Rotor (18), das mit der Antriebswelle (12) verbunden ist und den Rotor (18) zumindest entgegen der Entnahmerichtung (16) hält,
d) einen in den Rotor (18) integrierten Schnellverschluss (22), mittels dessen die Antriebswelle (12) und der Rotor (18) in Entnahmerichtung (16) fixiert werden,
e) eine Öffnung (24) im Rotor (18), durch welche die Antriebswelle (12) mit dem Endbereich (13b) greift, und die durch eine Öffnungswand (26) des Rotors (18) begrenzt ist,
wobei, zur Festlegung von Rotor (18) und Antriebswelle (12) rotorseitig mehrere Sperrelemente (30) vorgesehen sind, der Endbereich (13b) einen verbreiterten Bereich aufweist, der sich zu einem restlichen Bereich der Antriebswelle (12) hin verjüngt, der Schnellverschluss (22) Kraftübertragungselemente (32) aufweist, welche die Sperrelemente (30) mit einer Handhabe (36) verbinden, und dass die Verriegelung und/oder die Entriegelung des Schnellverschlusses (22) jeweils durch eine Bewegung der Handhabe (36) und der Kraftübertragungselemente (32) in eine Richtung parallel zur Antriebswelle (12) erfolgen, **dadurch gekennzeichnet, dass** die Sperrelemente (30) zum Festlegen des Rotors (18) relativ zur Antriebswelle (12) den Endbereich (13b) jeweils zumindest teilweise umgreifen, und die Sperrelemente (30) mit einer in Entnahmerichtung (16) weisenden Lagerfläche (30a) an dem Endbereich (13b) anliegen, die Sperrelemente (30) mit einer entgegen der Entnahmerichtung (16) weisenden Stützfläche (30b) an der Öffnungswand (26) des Rotors (18) anliegen und die Stützfläche der Sperrelemente (30) bei Anliegen einen Außenumfang bilden, der größer als der Innenumfang der Öffnung (24) ist,

2. Zentrifuge nach Anspruch 1, **dadurch gekennzeichnet, dass** die Sperrelemente (28) über zumindest eine Feder (32) federelastisch bewegbar und in Richtung der Antriebswelle (12) vorgespannt sind.

3. Zentrifuge nach Anspruch 1 oder 2, **dadurch gekennzeichnet, dass** die Sperrelemente (30) zum Entriegeln und Verriegeln des Schnellverschlusses (22) durch die Feder (32) elastisch so auslenkbar sind, dass der Endbereich (13b) an seiner breitesten Stelle (13c) in Bezug auf die Mittelachse (11) der Antriebswelle (12) durch die Sperrelemente (30) passierbar ist.

4. Zentrifuge nach Anspruch 2 oder 3, **dadurch gekennzeichnet, dass** die Feder (32) zwischen Handhabe (36) und Sperrelementen (30) angeordnet ist, und/oder dass die Kraftübertragungselemente die Feder (32) bilden.

5. Zentrifuge nach einem der Ansprüche 2 bis 4, **dadurch gekennzeichnet, dass** die Kraftübertragungselemente (32) federbelastet sind, so dass die Sperrelemente (30), wenn sie beim Aufsetzen des Rotors (18) von dem durch die Öffnung (24) eingreifenden Endbereich (13b) der Antriebswelle (12) zunächst aus ihrer Position verdrängt werden, schließlich in Aufsetzrichtung am Endbereich (13b) vorbeigreifen, sich an diesen anlegen und ihre Sperrwirkung erfüllen.

6. Zentrifuge nach einem der vorangehenden Ansprüche, **dadurch gekennzeichnet, dass** die Sperrelemente (30) auf ihrer zur Antriebswelle (12) zugewandten Seite im Hinblick auf die Form des Endbereichs (13b) der Antriebswelle (12) angepasst sind.

7. Zentrifuge nach einem der vorangehenden Ansprüche, **dadurch gekennzeichnet, dass** der Endbereich (13b) der Antriebswelle (12) kugelförmig ausgebildet ist und dass er insbesondere dabei im Übergangsbereich von der Verschlusskugel (14a) zur Antriebswelle (12) konkav verrundet ist.

8. Zentrifuge nach einem der vorangehenden Ansprüche, **dadurch gekennzeichnet, dass** die Öffnungswand (26) eine Steuerfläche (28) für die Sperrelemente (30) aufweist, die bei Einbringen des Rotors (18) durch Bewegen entgegen der Entnahmerichtung (16) in eine Verriegelungsposition des Schnellverschlusses (22) die Sperrelemente (30) in Richtung Antriebswelle (12) bewegt und in die Verriegelungsposition gegen die Antriebswelle (12) drückt, insbesondere ist dabei die Steuerfläche (28) so ausgebildet ist, dass in der Verriegelungsposition die Sperrelemente (30) bereichsweise an der dem Endbereich (13b) zugewandten Seite am Endbereich (13b) anliegen und auf der dem Endbereich (13b) abgewandten Seite an der Steuerfläche (28) anliegen.

9. Zentrifuge nach einem der Ansprüche 7 oder 8, **dadurch gekennzeichnet, dass** die Steuerfläche (28) bei einer Bewegung in Entnahmerichtung (16), also bei Öffnen des Schnellverschlusses (22), ein Auslenken der Sperrelemente (30) ermöglicht.

10. Zentrifuge nach einem der vorangehenden Ansprüche, **dadurch gekennzeichnet, dass** die Entriegelungsrichtung und die Entnahmerichtung (16) gleich sind und/oder dass die Entriegelung des Schnellverschlusses (22) und die Entnahme des Rotors (18) mechanisch miteinander gekoppelt sind.

11. Zentrifuge nach einem der vorangehenden Ansprüche, **dadurch gekennzeichnet, dass** eine Schwenkachse der Sperrelemente (30) senkrecht zur Mittelachse (11) der Antriebswelle (12) verläuft und dass die Federn (32) in der nicht ausgelenkten Stellung von der Schwenkachse bezogen auf die Mittelachse (11) nach unten, insbesondere parallel zur Mittelachse (11), verlaufen.

12. Zentrifuge nach einem der vorangehenden Ansprüche, **dadurch gekennzeichnet, dass** die Feder (32) und das Sperrelement (30) einstückig und materialeinheitlich ausgebildet sind und den Endbereich (13b) bereichsweise umgreifen.

13. Zentrifuge nach einem der vorangehenden Ansprüche, **dadurch gekennzeichnet, dass** die Steuerfläche (28) zumindest über eine Höhe der Mittelachse (11) konzentrisch zu dieser verläuft und dass die Sperrelemente (30) zumindest über eine Höhe der Mittelachse (11) konzentrisch zu dieser verlaufen.

14. Zentrifuge nach einem der vorangehenden Ansprüche, **dadurch gekennzeichnet, dass** die Handhabe (36), die Kraftübertragungselemente, die Federn (32) und die Sperrelemente (30) in Reihe geschaltet sind.

15. Zentrifuge nach einem der vorangehenden Ansprüche, **dadurch gekennzeichnet, dass** die Federn (32) und die Sperrelemente (30) in der Entriegelungsstellung und in der Verriegelungsstellung im Wesentlichen parallel zu der Mittelachse (11) und während der Entriegelung schräg zur Mittelachse (11) ausgerichtet sind.

## Claims

1. Centrifuge (10), comprising
a) a driveshaft (12) which has an end section (13b) that tapers toward the central axis (11) of the driveshaft (12),
b) a rotor (18) which is mounted on said driveshaft (12) and which can be axially removed in a removal direction (16),
c) a bearing (20) for the rotor (18), which bearing is connected to said driveshaft (12) and holds the rotor (18) at least against the removal direction (16),
d) a quick-action closure (22) which is integrated into the rotor (18) and which can be used to fix the driveshaft (12) and the rotor (18) in the removal direction (16),
e) an opening (24) provided in the rotor (18) and through which the driveshaft (12) engages with its end portion (13b), and which is delimited by an opening wall (26) of the rotor (18),
wherein multiple locking elements (30) are provided on the rotor side so as to fix the rotor (18) and the driveshaft (12), the end section (13b) has a widened portion that tapers into a remaining section of the driveshaft (12), the quick-action closure (22) has force-transmitting elements (32) that connect the locking elements (30) to a handle (36), and wherein the quick-action closure (22) is locked and/or unlocked by a respective movement of the handle (36) and the force-transmitting elements (32) in a direction parallel to the driveshaft (12),
**characterized in that** the locking elements (30) each at least partially engage round parts of the end section (13b) so as to fix the rotor (18) relative to the driveshaft (12), and that the bearing surfaces (30a) of the locking elements (30), which surfaces point in the removal direction (16), rest against the end section (13b), and the support surfaces (30b) of the locking elements (30), which surfaces point away from the removal direction (16), rest against the opening wall (26) of the rotor (18), and the support surfaces of the locking elements (30), in the resting position of said surfaces, form an outer circumference which is larger than the inner circumference of the opening (24).

2. Centrifuge according to claim 1, **characterized in that** said locking elements (28) can be displaced resiliently by means of at least one spring (32) and are preloaded in the direction of the driveshaft (12).

3. Centrifuge according to one of claims 1 or 2, **characterized in that** for unlocking and/or locking the quick-action closure (22), said locking elements (30) can be elastically deflected by means of the spring (32) in such a manner that said locking elements (30) can move past the end section (13b) at its widest portion (13c) relative to the central axis (11) of the driveshaft (12).

4. Centrifuge according to one of claims 2 or 3, **characterized in that** said spring (32) is located between the handle (36) and the locking elements (30), and/or that said force-transmitting elements form the spring (32).

5. Centrifuge according to any one of claims 2 to 4, **characterized in that** said force-transmitting elements (32) are spring-loaded so as to cause the locking elements (30), when initially displaced from their position by the end section (13b) of the driveshaft (12) engaging through the opening (24) as the rotor (18) is mounted, to ultimately move past the end section (13b) in the mounting direction, rest against this section and perform their locking effect.

6. Centrifuge according to any one of the preceding claims, **characterized in that** on the side facing the driveshaft (12), the locking elements (30) are adapted to the shape of the end section (13b) of the driveshaft (12).

7. Centrifuge according to any one of the preceding claims, **characterized in that** said end section (13b) of the driveshaft (12) is ball-shaped and that it is, more specifically, concavely rounded in the transition region from the locking ball (14a) to the driveshaft (12).

8. Centrifuge according to any one of the preceding claims, **characterized in that** said opening wall (26) includes a control surface (28) for the locking elements (30), which surface, when the rotor (18) is introduced by moving it in a direction opposite to the removal direction (16) and brought into a locking position of the quick-action closure (22), will move the locking elements (30) in the direction of the driveshaft (12) and urge them into the locking position against the driveshaft (12), with said control surface (28), more specifically, being formed such that, in the locking position, some areas of the locking elements (30) will rest against the end section (13b) on their side which faces said end section (13b), and that they will rest against the control surface (28), on their side which faces away from the end section (13b).

9. Centrifuge according to any one of claims 7 or 8, **characterized in that** said control surface (28), when moved in the removal direction (16), i.e. during opening of the quick-action closure (22), will allow the locking elements (30) to be deflected.

10. Centrifuge according to any one of the preceding claims, **characterized in that** the unlocking direction and the removal direction (16) are the same, and/or that the unlocking of the quick-action closure (22) and the removal of the rotor (18) are mechanically coupled to one another.

11. Centrifuge according to any one of the preceding claims, **characterized in that** a pivotal axis of the locking elements (30) extends perpendicular to the central axis (11) of the driveshaft (12), and that in their non-deflected position, the springs (32) extend downward from the pivotal axis, relative to the central axis (11), in particular in parallel to the central axis (11).

12. Centrifuge according to any one of the preceding claims, **characterized in that** the spring (32) and the locking element (30) are formed in one piece and made from the same material and engage round some areas of the end section (13b).

13. Centrifuge according to any one of the preceding claims, **characterized in that** the control surface (28) extends concentrically to the central axis (11), over at least a height thereof, and that the locking elements (30) extend concentrically to the central axis (11), over at least a height thereof.

14. Centrifuge according to any one of the preceding claims, **characterized in that** said handle (36), said force-transmitting elements, said springs (32) and said locking elements (30) are connected in series.

15. Centrifuge according to any one of the preceding claims, **characterized in that** in the unlocking and locking positions, said springs (32) and said locking elements (30) are essentially aligned in parallel to the central axis (11), and during unlocking, they are aligned obliquely to the central axis (11).

## Revendications

1. Centrifugeuse (10), comprenant
a) un arbre d'entraînement (12), lequel présente une zone d'extrémité (13b) qui se rétrécit en direction de l'axe central (11) de l'arbre d'entraînement (12),
b) un rotor (18) monté sur l'arbre d'entraînement (12), axialement amovible dans une direction de prélèvement (16),
c) un palier (20) pour le rotor (18), lequel palier est relié à l'arbre d'entraînement (12) et maintient le rotor (18) au moins à l'encontre de la direction de prélèvement (16),
d) une fermeture rapide (22) intégrée dans le rotor (18), au moyen de laquelle l'arbre d'entraînement (12) et le rotor (18) sont fixés dans la direction de prélèvement (16),
e) une ouverture (24) dans le rotor (18), par laquelle l'arbre d'entraînement (12) s'engage avec la zone d'extrémité (13b), et qui est délimitée par une paroi d'ouverture (26) du rotor (18),
dans laquelle, plusieurs éléments de blocage (30) sont prévus côté rotor pour fixer le rotor (18) et l'arbre d'entraînement (12), la zone d'extrémité (13b) présente une zone élargie qui se rétrécit en direction d'une zone restante de l'arbre d'entraînement (12), la fermeture rapide (22) présente des éléments de transmission de force (32), lesquels relient les éléments de blocage (30) à une poignée (36), et le verrouillage et/ou le déverrouillage de la fermeture rapide (22) sont réalisés chacun à la suite d'un déplacement de la poignée (36) et des éléments de transmission de force (32) dans une direction parallèle à l'arbre d'entraînement (12), **caractérisée en ce que** les éléments de blocage (30), pour fixer le rotor (18) par rapport à l'arbre d'entraînement (12), entourent respectivement au moins en partie la zone d'extrémité (13b), et les éléments de blocage (30) s'appliquent par une surface d'appui (30a) pointant dans la direction de prélèvement (16) contre la zone d'extrémité (13b), les éléments de blocage (30) s'appliquent par une surface de support (30b) pointant à l'encontre de la direction de prélèvement (16) contre la paroi d'ouverture (26) du rotor (18) et la surface de support des éléments de blocage (30), lorsque ceux-ci sont appliqués, forment une périphérie extérieure qui est plus grande que la périphérie intérieure de l'ouverture (24).

2. Centrifugeuse selon la revendication 1, **caractérisée en ce que** les éléments de blocage (28) peuvent être déplacés de manière élastique par l'intermédiaire d'au moins un ressort (32) et sont précontraints en direction de l'arbre d'entraînement (12).

3. Centrifugeuse selon la revendication 1 ou 2, **caractérisée en ce que** les éléments de blocage (30) peuvent être déviés élastiquement par le ressort (32) pour le déverrouillage et le verrouillage de la fermeture rapide (22), de sorte que la zone d'extrémité (13b), à son emplacement le plus large (13c) par rapport à l'axe central (11) de l'arbre d'entraînement (12), peut être franchie par les éléments de blocage (30).

4. Centrifugeuse selon la revendication 2 ou 3, **caractérisée en ce que** le ressort (32) est agencé entre la poignée (36) et les éléments de blocage (30), et/ou **en ce que** les éléments de transmission de force forment le ressort (32).

5. Centrifugeuse selon l'une quelconque des revendications 2 à 4, **caractérisée en ce que** les éléments de transmission de force (32) sont sollicités par un ressort, de sorte que les éléments de blocage (30), lorsqu'ils sont déplacés par la zone d'extrémité (13b) de l'arbre d'entraînement (12), laquelle zone s'insère à travers l'ouverture (24), lors de la mise en place du rotor, dans un premier temps à partir de leur position, s'engagent pour finir devant la zone d'extrémité (13b) dans la direction de mise en place, s'appliquent contre celle-ci et assurent leur effet de blocage.

6. Centrifugeuse selon l'une quelconque des revendications précédentes, **caractérisée en ce que** les éléments de blocage (30), sur leur face tournée vers l'arbre d'entraînement (12), sont adaptés à la forme de la zone d'extrémité (13b) de l'arbre d'entraînement (12).

7. Centrifugeuse selon l'une quelconque des revendications précédentes, **caractérisée en ce que** la zone d'extrémité (13b) de l'arbre d'entraînement (12) est sphérique et **en ce qu'**elle est en particulier arrondie de manière concave dans la zone de transition de la sphère de fermeture (14a) à l'arbre d'entraînement (12).

8. Centrifugeuse selon l'une quelconque des revendications précédentes, **caractérisée en ce que** la paroi d'ouverture (26) présente une surface de commande (28) pour les éléments de blocage (30), qui, lors de l'introduction du rotor (18), à la suite d'un déplacement à l'encontre de la direction de prélèvement (16), dans une position de verrouillage de la fermeture rapide (22), déplace les éléments de blocage (30) en direction de l'arbre d'entraînement (12) et les presse dans la position de verrouillage contre l'arbre d'entraînement (12), en particulier la surface de commande (28) est conçue de sorte que, dans la position de verrouillage, les éléments de blocage (30) s'appliquent par endroits, par leur face tournée vers la zone d'extrémité (13b), contre la zone d'extrémité (13b), et s'appliquent, sur la face opposée à la zone d'extrémité (13b), contre la surface de commande (28).

9. Centrifugeuse selon l'une quelconque des revendications 7 ou 8, **caractérisée en ce que** la surface de commande (28), lors d'un déplacement dans la direction de prélèvement (16), par conséquent lors de l'ouverture de la fermeture rapide (22), permet une déviation des éléments de blocage (30).

10. Centrifugeuse selon l'une quelconque des revendications précédentes, **caractérisée en ce que** la direction de déverrouillage et la direction de prélèvement (16) sont identiques et/ou **en ce que** le déverrouillage de la fermeture rapide (22) et le prélèvement du rotor (18) sont couplés l'un à l'autre mécaniquement.

11. Centrifugeuse selon l'une quelconque des revendications précédentes, **caractérisée en ce qu'**un axe de pivotement des éléments de blocage (30) s'étend perpendiculairement à l'axe central (11) de l'arbre d'entraînement (12) et **en ce que** les ressorts (32), dans la position non déviée de l'axe de pivotement, par rapport à l'axe central (11), s'étendent vers le bas, en particulier parallèlement à l'axe central (11).

12. Centrifugeuse selon l'une quelconque des revendications précédentes, **caractérisée en ce que** le ressort (32) et l'élément de blocage (30) sont réalisés d'une seule pièce et dans le même matériau et entourent la zone d'extrémité (13b) par endroits.

13. Centrifugeuse selon l'une quelconque des revendications précédentes, **caractérisée en ce que** la surface de commande (28) s'étend au moins sur une hauteur de l'axe médian (11) de manière concentrique par rapport à ce dernier et **en ce que** les éléments de blocage (30) s'étendent au moins sur une hauteur de l'axe central (11) de manière concentrique par rapport à ce dernier.

14. Centrifugeuse selon l'une quelconque des revendications précédentes, **caractérisée en ce que** la poignée (36), les éléments de transmission de force, les ressorts (32) et les éléments de blocage (30) sont montés en série.

15. Centrifugeuse selon l'une quelconque des revendications précédentes, **caractérisée en ce que** les ressorts (32) et les éléments de blocage (30), dans la position de déverrouillage et dans la position de verrouillage, sont orientés sensiblement parallèlement à l'axe central (11) et de manière inclinée par rapport à l'axe central (11) pendant le déverrouillage.
